# FASCICULE DE BREVET EUROPEEN

(11) **EP 3 721 715 B1**
(45) Date de publication et mention de la délivrance du brevet: **18.12.2024**
(21) Numéro de dépôt: 20167264.9
(22) Date de dépôt: 31.03.2020
(51) Int. Cl.: A23C 9/144, A23C 21/00, A23C 9/152

(54) **PROCEDE DE DEMINERALISATION D'UNE COMPOSITION PROTEIQUE LAITIERE**
VERFAHREN ZUR DEMINERALISIERUNG EINER MILCH-EIWEISS-ZUSAMMENSETZUNG
METHOD FOR DEMINERALISATION OF A DAIRY PROTEIN COMPOSITION

(30) Priorité: 12.04.2019 FR 1903955; 25.03.2020 FR 2002936
(43) Date de publication de la demande: 14.10.2020
(73) Titulaire: Eurodia Industrie, 84120 Pertuis (FR)
(72) Inventeur: GONIN, Anne, 13610 LE PUY STE REPARADE (FR); LUTIN, Florence, 92160 ANTONY (FR); LARGETEAU, Denis, 78310 MAUREPAS (FR)
(74) Mandataire: Cabinet Beau de Loménie

(56) Documents cités:
- EP-A1- 1 053 685
- EP-A1- 3 597 045
- EP-B1- 3 313 190
- EP-B1- 3 597 045
- WO-A1-2016/207579
- WO-A1-2019/180389
- US-A- 4 971 701
- US-A- 5 851 372
- US-A- 6 033 700
- US-A1- 2009 142 459

## Description

### Domaine Technique

La présente invention concerne un procédé de déminéralisation d'une composition protéique laitière. Ce procédé permet d'obtenir en particulier un lactosérum déminéralisé.

### Technique antérieure

Une composition protéique laitière peut être du lactosérum. Le lactosérum, également appelé sérum ou petit-lait, est la partie liquide issue de la coagulation du lait. On distingue notamment deux sortes de lactosérums : ceux issus des fabrications en milieu acide de caséines ou de fromages à pâte fraîche (lactosérums acides) ; et ceux issus des fabrications de caséines mettant en oeuvre une présure et des fromages à pâte pressée cuite ou demi-cuite (lactosérums doux).

Le lactosérum est principalement formé d'eau, de lactose, de protéines, notamment de protéines sériques, et de minéraux. Le lactosérum peut être valorisé en isolant d'une part le lactose, et d'autre part les protéines. Les protéines de lactosérum peuvent être également valorisées en tant qu'ingrédient pour la fabrication de laits infantiles. Le lactosérum déminéralisé, notamment le lactose, peut être utilisé dans la fabrication de confiseries, de gâteaux et de crèmes glacées, de plats cuisinés, de pâtisseries,....

Les lactosérums peuvent être déminéralisés en subissant une étape de nanofiltration, suivie d'une électrodialyse et/ou un passage sur des résines échangeuses de cations et d'anions pour atteindre des taux de déminéralisation de 70 à 90%, voire supérieurs.

Les résines échangeuses d'ions génèrent cependant des volumes d'effluents salins de régénération qui sont importants, difficiles et couteux à traiter.

En parallèle, les consommateurs recherchent de façon croissante des ingrédients issus de l'industrie agroalimentaire qui préservent leurs propriétés naturelles initiales, et donc qui ne soient pas modifiés et/ou dénaturés, ou dans tous les cas le moins possible. De plus, il est également recherché des procédés de déminéralisation de produits laitiers, limitant, voir supprimant, la présence d'espèces exogènes minérales. Or, les résines échangeuses d'ions fonctionnent en échangeant des espèces minérales dans la composition à traiter contre des espèces minérales exogènes. Cependant, la suppression d'un ou plusieurs passages sur des résines échangeuses d'ions complique l'obtention de compositions protéiques laitières déminéralisées à des taux élevés, par exemple déminéralisées à 70%, 80% ou 90%. La déminéralisation se reportant sur d'autres systèmes de traitement, il existe un risque que les membranes de ces systèmes s'encrassent plus vite du fait de la charge minérale importante.

US 4.971.701A décrit un procédé de déminéralisation du lactosérum comprenant l'extraction simultanée d'ions chargés positivement et négativement via une technique d'électrolyse. Ce procédé ne doit pas être confondu avec une électrodialyse à trois compartiments configurée pour permettre une substitution des cations, ou des anions, et non une extraction simultanée de cations et d'anions. D'autres procédés de déminéralisation de compositions protéiques laitières sont décrits dans WO 2016/207579 A1 et EP 1 053 685 A1, par exemple.

La présente invention vise ainsi à proposer un procédé de déminéralisation d'une composition protéique laitière sans utilisation de résines échangeuses d'ions (anioniques et/ou cationiques).

La présente invention vise également à proposer un procédé de déminéralisation d'une composition protéique laitière limitant, voire supprimant, l'introduction de composés minéraux exogènes dans la composition protéique laitière.

### Exposé de l'invention

La présente invention pallie les problèmes précités en ce qu'elle a pour objet, selon un premier aspect, un procédé de fabrication d'une composition protéique laitière déminéralisée, caractérisé en ce qu'il comprend les étapes suivantes:
(i)- fourniture d'une composition protéique laitière ;
(ii)- électrodialyse de la composition protéique laitière sur un électrodialyseur, dont les unités cellulaires sont à trois compartiments, et configuré pour substituer au moins un cation par au moins un ion hydrogène H⁺ dans la composition protéique laitière pour obtenir une composition protéique laitière au moins partiellement déminéralisée et acidifiée ;
(iii)- électrodialyse de la composition protéique laitière obtenue à l'étape (ii) sur un électrodialyseur, dont les unités cellulaires sont à trois compartiments, et configuré pour substituer au moins un anion par au moins un ion hydroxyle OH⁻ dans la composition protéique laitière;
(iv) obtention de la composition protéique laitière déminéralisée.

De manière générale, lors d'une électrodialyse, les espèces ionisées, minérales ou organiques, dissoutes, telles que des sels, acides ou bases, sont transportées à travers des membranes ioniques sous l'action d'un courant électrique. Une unité d'électrodialyse peut comprendre des membranes cationiques (perméables aux cations) MEC et/ou des membranes anioniques (perméables aux anions) MEA disposées parallèlement et de manière alternée. Sous l'action du champ électrique appliqué à l'aide d'une anode et d'une cathode, les MEC bloquent les anions et laissent passer les cations, tandis que les MEA bloquent les cations et laissent passer des anions. Il se crée alors des compartiments de concentration (concentrats) et des compartiments de dessalement. Ce type d'électrodialyse le plus courant, est une électrodialyse dont l'unité cellulaire de base comprend deux compartiments. L'unité cellulaire correspond, au plus petit motif de répétition, des opérations de concentration et de dessalement (un compartiment correspondant à une concentration ou à un dessalement). Les solutions sont renouvelées dans les compartiments par une circulation parallèle au plan des membranes. L'application d'un courant est assurée par deux électrodes parallèles au plan des membranes et placées aux extrémités de l'électrodialyseur.

Avantageusement, et de manière originale, dans la présente invention, les électrodialyseurs sont à trois compartiments, et permettent en outre des substitutions d'ions. Ainsi, en sus des compartiments de dessalement (dans lesquels les ions disparaissent) et des compartiments de concentration (dans lesquels les ions s'accumulent), les électrodialyseurs des étapes ii) et iii) comprennent des compartiments de conversion, cationique s'agissant de l'étape ii), et anionique s'agissant de l'étape iii).

La composition protéique laitière (CPL) obtenue à l'étape ii) est ainsi appauvrie en cations, et donc acidifiée (avec une baisse de pH), tandis que la composition protéique laitière obtenue à l'étape iii) est appauvrie en anions (avec une remontée du pH). Les étapes ii) et iii) combinées permettent ainsi d'effectuer une déminéralisation cationique suivie d'une déminéralisation anionique, ces étapes ii) et iii) correspondant ainsi, respectivement, à une substitution cationique et une substitution anionique. La déminéralisation obtenue est poussée, et peut atteindre un taux de déminéralisation supérieur ou égal à 70%, en particulier supérieur ou égal à 75%, ou 80% ou encore 85%, plus particulièrement supérieur ou égal à 90%.

Avantageusement, le procédé selon l'invention ne génère pas d'effluents de régénération à traiter, ne consomme pas, ou très peu selon les différentes variantes développées ci-après, d'acide et base exogènes, et est donc moins polluant. Ce procédé peut être qualifié d'éco-efficient.

La composition protéique laitière obtenue à l'étape ii) a un pH acide, en particulier inférieur ou égal au point isoélectrique des protéines (notamment sériques) de la CPL de l'étape i), notamment inférieur ou égal à 6, de préférence inférieur ou égal à 4.

Cette disposition favorise la maîtrise de la stabilité microbiologique. De plus, la composition protéique laitière peut alors subir un traitement thermique, dans des conditions de température et de durée différentes de celles appliquées en milieu non acide, ce qui permet de limiter la dénaturation des protéines. Les protéines laitières sont donc avantageusement moins dégradées.

Avantageusement, la remontée du pH lors de l'étape iii), en particulier en sorte d'être supérieur ou égal au pKa d'au moins un acide organique de la composition traitée, permet d'obtenir la forme anionique de l'acide organique et ainsi de l'extraire à travers les membranes anioniques à l'étape iii).

De préférence, la température de la composition protéique laitière à l'étape ii) et/ou l'étape iii) est inférieure ou égale à 40°C, en particulier supérieure à 0°C.

La composition protéique laitière après l'étape iii), notamment à l'étape iv), a un pH supérieur ou égal à 6, en particulier supérieur ou égale à 6.2, plus particulièrement inférieur ou égal à 8.

### Composition protéique laitière

De préférence, la composition protéique laitière est choisie parmi : un lactosérum, tel qu'un lactosérum doux ou un lactosérum acide ou leur mélange ; un perméat d'ultrafiltration du lait ; un perméat de microfiltration du lait ; un rétentat ou un perméat d'ultrafiltration de lactosérum; un rétentat ou un perméat d'ultrafiltration d'un perméat de microfiltration du lait ; ou un mélange de ces derniers (liste I).

De préférence, le lactosérum doux et/ou le lactosérum acide est/sont brut(s), c'est-à-dire qu'il(s) n'a/ont pas subi d'opération visant à diminuer sa/leur charge minérale. Le lactosérum, cité sans précision, peut être ainsi brut ou partiellement déminéralisé.

Un lactosérum doux est de préférence obtenu par un traitement chimique du lait, en particulier mettant en oeuvre de la présure, permettant de récupérer d'une part les caséines et d'autre part le lactosérum doux.

Un lactosérum acide est de préférence obtenu par un traitement acide du lait, notamment mettant en oeuvre de l'acide lactique et/ou de l'acide chlorhydrique, permettant de récupérer d'une part les caséines, et d'autre part le lactosérum acide.

Le lactosérum, brut ou partiellement déminéralisé, peut être pré concentré, mécaniquement (par exemple par osmose inverse ou nanofiltration ou une combinaison de ces derniers) ou thermiquement (par exemple par évaporation). Le lactosérum brut acide et/ou le lactosérum brut doux et/ou le perméat de microfiltration du lait, a/ont un extrait sec supérieur à 0% et inférieur ou égal à 6% environ (+/- 10%). Le lactosérum brut et/ou le perméat de microfiltration du lait peut/peuvent subir une étape de concentration, telle que définie ci-dessus, afin d'avoir un extrait sec supérieur ou égal à 18% environ (+/- 10%) et inférieur ou égal à 22% environ (+/- 10%).

La composition protéique laitière selon l'invention est liquide lors de sa mise en oeuvre. Elle peut être obtenue par reconstitution d'une solution liquide à partir de poudre(s) et/ou de liquide(s), notamment choisi(e)(s) dans la liste I ci-dessus.

De préférence, la composition protéique laitière à l'étape i) est partiellement déminéralisée. Cette disposition permettrait de diminuer la taille des électrodialyseurs à trois compartiments lors de l'étape ii) et/ou de l'étape iii), i.e la surface membranaire active.

De préférence, le taux de déminéralisation de la composition protéique laitière à l'étape i) est supérieur ou égal à 30%, encore de préférence supérieur ou égal à 40%, préférentiellement supérieur ou égal à 50%, en particulier supérieur ou égal à 60%, particulièrement inférieur ou égal à 70%.

De préférence, le taux de déminéralisation de la composition protéique laitière obtenue à l'étape iv) est supérieur ou égal à 70%, en particulier supérieur ou égal à 85%, plus particulièrement supérieur ou égal à 90% (DM90).

Dans un mode de réalisation, la composition protéique laitière a un extrait sec en masse supérieur à 1%, de préférence supérieur ou égal à 5%, et inférieur ou égal à 10%. Il s'agit par exemple d'un lactosérum non concentré.

Dans un autre mode de réalisation, la composition protéique laitière a un extrait sec en masse supérieur ou égal à 10%, et inférieur ou égal à 30% ; de préférence supérieur ou égal à 15% et inférieur ou égal à 25%. Il s'agit par exemple d'un lactosérum concentré. La concentration en matière sèche du lactosérum peut être effectuée par osmose inverse, nanofiltration ou tout autre mode de concentration thermique.

De manière générale, la composition protéique laitière peut être issue de toute femelle laitière.

De préférence, la composition protéique laitière est issue d'un lait choisi parmi : le lait de vache, le lait de chèvre, le lait de brebis, le lait d'ânesse, le lait de bufflonne, le lait de jument, ou un mélange de ces derniers, encore de préférence choisi parmi : le lait de vache, le lait de chèvre et le lait de brebis ou un mélange de ces derniers, en particulier il s'agit du lait de vache.

La composition protéique comprend des protéines laitières, en particulier des des protéines sériques.

Le lactosérum comprend des protéines sériques, et ne comprend pas de caséines restées dans la partie prise en masse (coagulée) lors de la transformation du lait et/ou dans le rétentat de microfiltration du lait.

De préférence, le lactosérum doux brut présente l'une des propriétés suivantes, seule ou en combinaison :
- un pH compris entre 5.8 et 6.5 ;
- le rapport de la masse du lactose sur la masse de l'extrait sec est supérieur ou égal à 70%, notamment supérieur ou égal à 74% ;
- le rapport de la masse des protéines sur la masse de l'extrait sec est supérieur ou égal à 10%, notamment supérieur ou égal à 12%, notamment inférieur ou égal à 30% ;
- le rapport de la masse des cendres sur la masse de l'extrait sec est supérieur ou égal à 8%, notamment inférieur ou égal à 10% ; et
- le rapport de la masse des acides organiques sur la masse de l'extrait sec est supérieur ou égal à 2%, notamment inférieur ou égal à 5%.

De préférence, le lactosérum acide brut présente l'une des propriétés suivantes, seule ou en combinaison :
- un pH inférieur ou égal à 5, notamment inférieur ou égal à 4.5 ;
- le rapport de la masse du lactose sur la masse de l'extrait sec est supérieur ou égal à 55%, notamment inférieur ou égal à 65%, s'agissant d'un lactosérum issu de la fabrication en milieu acide de fromages ;
- le rapport de la masse du lactose sur la masse de l'extrait sec est supérieur ou égal à 70%, notamment inférieur ou égal à 85%, s'agissant d'un lactosérum issu de la fabrication en milieu acide de caséines;
- le rapport de la masse des protéines sur la masse de l'extrait sec est supérieur ou égal à 4%, notamment inférieur ou égal à 12% ;
- le rapport de la masse des cendres sur la masse de l'extrait sec est supérieur ou égal à 10%, notamment inférieur ou égal à 15% ; et
- le rapport de la masse des acides organiques sur la masse de l'extrait sec est supérieur ou égal à 10%, notamment inférieur ou égal à 20%, s'agissant d'un lactosérum issu de la fabrication en milieu acide lactique de fromages;
- le rapport de la masse des acides organiques sur la masse de l'extrait sec est supérieur ou égal à 2%, notamment inférieur ou égal à 5%, s'agissant d'un lactosérum issu de la fabrication en milieu acide de caséines.

La déminéralisation consiste essentiellement dans le retrait total ou partiel des cendres présentes dans la composition protéique laitière, notamment le lactosérum.

Le taux de cendres de la composition protéique laitière peut être déterminé avec la méthode normalisée NF V04-208 Octobre 1989, intitulée « Lait- Détermination des cendres- Méthode de référence ».

On comprend dans le présent texte par extrait sec en masse, la masse sèche de la composition protéique laitière, obtenue après évaporation de l'eau jusqu'à obtention d'une masse sèche totale stable rapportée sur la masse totale de la composition protéique laitière, notamment à la pression atmosphérique. L'extrait sec en masse peut être déterminé avec la méthode normalisée ISO 6731: janvier 2011, « Lait, crème, et lait concentré non sucré - Détermination de la matière sèche (Méthode de référence) ».

De préférence, la composition protéique laitière (ou CPL), à l'étape i), a une conductivité supérieure ou égale à 1 mS/cm, encore de préférence supérieure ou égale à 3 mS/cm.

De préférence, la CPL, à l'étape iv), a un taux de cendres inférieur ou égal à 2,5% et de préférence inférieur ou égal à 1,5% sur sec.

De préférence, la composition protéique laitière comprend les cations suivants : calcium, le magnésium, le sodium, le potassium, qui sont en particulier les cations visés par le procédé de déminéralisation selon l'invention.

De préférence, la composition protéique laitière comprend les anions suivants : le chlorure, le phosphate, le sulfate, le lactate, l'acétate, et le citrate, qui sont en particulier les anions visés par le procédé de déminéralisation selon l'invention.

Dans un mode de réalisation, les cations monovalents et les anions monovalents sont extraits au moins en partie de la CPL lors d'une étape préliminaire de déminéralisation, avant l'étape i), comprenant une étape de nanofiltration ou d'osmose inverse et une étape d'électrodialyse à deux compartiments, en particulier appliquée au rétentat de la nanofiltration.

Dans une variante, le procédé de fabrication comprend une étape de traitement (v) d'au moins une partie du ou des sel(s), de préférence du sel de chlorure de sodium et/ou du sel de chlorure potassium (NaCl, KCI), choisi(s) parmi les sels suivants :
- le ou les sel(s) issu(s) directement de l'étape d'électrodialyse ii),
- le ou les sel(s) issu(s) indirectement de l'étape d'électrodialyse ii),
- le ou les sel(s) issu(s) directement de l'étape d'électrodialyse iii),
- le ou les sel(s) issu(s) indirectement de l'étape d'électrodialyse iii),
- le ou les sel(s) issu(s) d'une étape de déminéralisation préliminaire effectuée sur la composition protéique laitière à l'étape i),
- un mélange de ces derniers,
ladite étape de traitement (v) étant configurée pour produire un ou des acide(s) du ou des sel(s) d'une part, de préférence de l'acide chlorhydrique et/ou de l'acide sulfurique, et une ou des base(s) du ou des sel(s) d'autre part, de préférence de l'hydroxyde de sodium et/ou de l'hydroxyde de potassium.

On comprend par le sel est issu directement de l'étape ii) et/ou iii) et/ou i) que ce dernier n'a pas subi une étape vi) ou vii) définie ci-après, en particulier une étape de nanofiltration.

On comprend par le sel est issu indirectement de l'étape ii) et/ou iii) et/ou i) que ce dernier a subi une étape vi) ou vii) définie ci-après, en particulier une étape de nanofiltration.

L'étape de déminéralisation préliminaire consiste en/comprend une étape d'électrodialyse sur un électrodialyseur à deux compartiments, en particulier comprenant des membranes permsélectives, notamment anionique(s) et/ou cationique(s). Dans ce cas, les sels utilisés dans les étapes ii) et/ou iii) sont donc avantageusement au moins en partie issus de la composition protéique laitière elle-même.

Le ou les sel(s) mis en oeuvre dans le procédé selon l'invention est/sont de préférence choisi(s) parmi: un chlorure d'un cation monovalent ; un chlorure d'un cation divalent ; en particulier le chlorure de sodium, le chlorure de potassium, et le chlorure de calcium; un sulfate d'un cation monovalent, un sulfate d'un cation divalent ; en particulier le sulfate de sodium, le sulfate de potassium, et le sulfate de calcium ; un phosphate d'un cation monovalent, un phosphate d'un cation divalent ; en particulier le phosphate de sodium, le phosphate de potassium, et le phosphate de calcium ; et un mélange de ces derniers.

De préférence, l'étape ii) (en particulier de substitution cationique) comprend la circulation de la composition protéique laitière entre deux membranes cationiques, en particulier le compartiment dans lequel la composition protéique laitière circule est délimité entre deux membranes cationiques.

De préférence, l'étape iii) (en particulier de substitution anionique) comprend la circulation de la composition protéique laitière entre deux membranes anioniques, en particulier le compartiment dans lequel la composition protéique laitière circule est délimité entre deux membranes anioniques.

Dans une variante, l'étape de traitement (v) consiste en une étape d'électrodialyse effectuée sur un électrodialyseur à membrane(s) bipolaire(s).

Une membrane bipolaire est composée d'une couche échangeuse de cations et d'une couche échangeuse d'anions séparées par une jonction hydrophile.

Dans une variante, l'électrodialyseur à membrane(s) bipolaire(s), à l'étape (v), comprend des unités cellulaires à trois compartiments A, B et C, les compartiments A et B sont alimentés en eau et un compartiment C, disposé entre les compartiments A et B, est alimenté par un ou plusieurs sel(s), notamment le sel de chlorure de sodium et/ou le sel de chlorure de potassium (NaCl et/ou KCI).

Dans un mode de réalisation, les unités cellulaires de l'électrodialyseur à l'étape v) comprennent chacune un premier compartiment délimité entre une membrane bipolaire et une membrane anionique, un second compartiment délimité entre une membrane anionique et une membrane cationique, et un troisième compartiment délimité entre une membrane cationique et une membrane bipolaire.

De préférence, le premier compartiment et le troisième compartiment sont alimentés en eau, et le second compartiment, disposé entre les premier et troisième compartiments, est alimenté en sel(s).

Avantageusement, l'étape v), en particulier l'étape d'électrodialyse à membrane(s) bipolaire(s) v), permet de générer un acide, notamment l'acide chlorhydrique et/ou l'acide sulfurique, et une base, notamment l'hydroxyde de sodium et/ou l'hydroxyde de potassium, à partir des flux de sel(s) issu(s) des étapes ii) et/ou iii), notamment de leurs premiers ou de leurs troisièmes compartiments respectifs (selon que les étapes ii) et/ou iii) mettent en oeuvre des membranes permsélectives définies ci-après).

Cette disposition permet de mettre en oeuvre les étapes d'électrodialyse ii) et/ou iii) avec des sels acides ou basiques issus de la composition protéique laitière elle-même. Le procédé permet donc de supprimer, ou à tout le moins de réduire très significativement, l'introduction de composés minéraux exogènes.

Le ou les sels, notamment le sel de chlorure de sodium, peut/peuvent provenir aussi, en partie, de la ou des étape(s) de déminéralisation préliminaire(s) appliquée(s) à la composition protéique laitière à l'étape i), notamment issu d'une étape de nanofiltration et/ou d'électrodialyse (à deux compartiments).

Dans une variante, au moins une partie du ou des sel(s), notamment d'acide chlorhydrique et/ou d'acide sulfurique, obtenu(s) lors de l'étape de traitement (v) est/sont alimenté(s) à l'un des trois compartiments de l'électrodialyseur à l'étape ii).

Dans une variante, au moins une partie du ou des sel(s), notamment d'hydroxyde de sodium et/ ou d'hydroxyde de potassium, obtenu(s) lors de l'étape de traitement (v), est/sont alimenté(s) à l'un des trois compartiments de l'électrodialyseur à l'étape iii).

Dans une variante, l'étape d'électrodialyse ii) produit un mélange comprenant au moins un sel de chlorure d'un cation monovalent, tel que un sel de chlorure de sodium et/ou un sel de chlorure de potassium, et au moins un sel de chlorure d'un cation divalent, tel que un sel de chlorure de calcium (CaCl₂), et ledit mélange subit une étape de séparation (vi) du ou des sel(s) de chlorure d'un cation monovalent, et du ou des sel(s) de chlorure d'un cation divalent, notamment une étape de nanofiltration.

Dans une variante, le procédé selon l'invention comprend une étape d'électrodialyse de la composition protéique laitière au moins partiellement déminéralisée et acidifiée (CPL1) obtenue à l'étape ii), et effectuée avant l'étape iii), sur un électrodialyseur comprenant des unitaires cellulaires à deux compartiments. L'électrodialyseur comprend plusieurs cellules, par exemple au moins cinq cellules. Dans un premier mode de réalisation, l'électrodialyseur comprend au moins une unité cellulaire comprenant un premier compartiment délimité entre une membrane cationique et une membrane anionique, et un deuxième compartiment délimité entre une membrane anionique, en particulier celle du premier compartiment, et une membrane cationique, en particulier celle du premier compartiment. De préférence, le premier compartiment est alimenté par la composition protéique laitière (CPL1) partiellement déminéralisée et acidifiée obtenue à l'étape ii). De préférence, le second compartiment est alimenté par de l'eau.

Cette étape permet avantageusement d'extraire à la fois des anions et des cations dans CPL1.

Cette étape d'électrodialyse intermédiaire, en particulier entre ESC (ii) et ESA (iii), permet de réduire la taille de l'électrodialyseur (c'est-à-dire le nombre de cellules) à l'étape iii).

Cette étape d'électrodialyse à deux compartiments intermédiaire effectuée entre les étapes ii) et iii) permet également d'atteindre un taux d'abattement de plus de 90% en cations et en anions.

L'étape d'électrodialyse intermédiaire sur un électrodialyseur à deux compartiments peut être effectuée avant ou après l'étape viii) de traitement thermique décrite dans le présent texte.

Dans une variante, l'étape d'électrodialyse iii) produit un mélange comprenant au moins un sel de sodium d'un anion monovalent, et au moins un sel de sodium d'un anion divalent, notamment un sel de chlorure de sodium (NaCl) et un sel de phosphate de sodium, et ce mélange subit une étape de séparation (vii), notamment une étape de nanofiltration, du ou des sel(s) de sodium d'un anion monovalent, et du ou des sel(s) de sodium d'un anion divalent.

Ces étapes vi) et/ou vii) permettent de compléter l'électrodialyse à membrane(s) bipolaire(s), en particulier si les étapes ii) et iii) sont effectuées sans membranes permsélectives, en évitant la précipitation de cations divalent(s), notamment du calcium et/ou du magnésium, sur les membranes, en particulier sur les membranes cationiques de l'électrodialyse bipolaire de l'étape v).

Dans une variante, le sel d'un cation monovalent, en particulier le sel de chlorure d'un cation monovalent, de préférence le chlorure de sodium, collecté à l'issu de l'étape de séparation (vi) et/ou l'étape de séparation (vii), est alimenté à l'étape d'électrodialyse ii) et/ou à l'étape d'électrodialyse iii).

Cette disposition s'applique en particulier lorsque les étapes ii) et iii) sont effectuées avec des membranes permsélectives définies ci-après.

Dans une variante, le sel d'un cation monovalent, en particulier le sel de chlorure d'un cation monovalent, de préférence le chlorure de sodium, collecté à l'issu de l'étape de séparation (vi) et/ou l'étape de séparation (vii) subit, au moins en partie, l'étape de traitement (v).

Cette disposition s'applique en particulier lorsque les étapes ii) et iii) sont effectuées sans membranes permsélectives définies ci-après.

Dans une variante, l'électrodialyseur à l'étape ii) comprend au moins une membrane permsélective aux cations monovalents.

Ainsi, la membrane permsélective aux cations monovalents (ou aux anions monovalents), est traversée uniquement par des cations monovalents (ou par des anions monovalents), et n'est pas traversée par des anions (ou des cations), et des cations (ou des anions) ayant une valence supérieure à 1, notamment divalents.

Dans une variante, les unités cellulaires à trois compartiments de l'électrodialyseur à l'étape ii) comprennent au moins une unité cellulaire comprenant, de préférence chacune des unités cellulaires comprend :
- un premier compartiment délimité entre une membrane permsélective aux cations monovalents et une membrane cationique ;
- un second compartiment délimité entre deux membranes cationiques ;
- un troisième compartiment délimité entre une membrane cationique et une membrane permsélective aux cations monovalents.

Dans une autre variante, les unités cellulaires à trois compartiments de l'électrodialyseur à l'étape ii) comprennent au moins une unité cellulaire comprenant, de préférence chacune des unités cellulaires comprend :
- un premier compartiment délimité entre une membrane anionique et une membrane cationique;
- un second compartiment délimité entre deux membranes cationiques, et
- un troisième compartiment délimité entre une membrane cationique et une membrane anionique.

L'étape (ii) de substitution cationique peut ainsi être effectuée à l'aide de membrane(s) permsélective(s) ou non.

Dans une sous-variante (des variantes de l'étape ii) ci-avant), le premier compartiment est alimenté par au moins un sel acide, de préférence un sel d'acide chlorhydrique, le second compartiment est alimenté par la composition protéique laitière de l'étape i), et le troisième compartiment est alimenté par au moins un sel de chlorure d'un cation monovalent, de préférence de sodium.

Dans une variante, l'électrodialyseur à l'étape iii) comprend au moins une membrane permsélective aux anions monovalents.

Ainsi, la membrane permsélective aux anions monovalents est traversée uniquement par des anions monovalents, et n'est pas traversée par des cations et des anions ayant une valence supérieure à 1, notamment divalents, ou ayant une masse moléculaire supérieure ou égale à 90 (Daltons, i.e la somme des masses atomiques des différents atomes constituant la molécule).

Dans une variante, les unités cellulaires à trois compartiments de l'électrodialyseur à l'étape iii) comprennent au moins une unité cellulaire comprenant, de préférence chacune des unités cellulaires comprend :
- un premier compartiment délimité entre une membrane permsélective aux anions monovalents et une membrane anionique ;
- un second compartiment délimité entre deux membranes anioniques ;
- un troisième compartiment délimité entre une membrane anionique et une membrane permsélective aux anions monovalents.

Dans une autre variante, les unités cellulaires à trois compartiments de l'électrodialyseur à l'étape iii) comprennent au moins une unité cellulaire comprenant, de préférence chacune des unités cellulaires comprend :
- un premier compartiment délimité entre une membrane cationique et une membrane anionique ;
- un second compartiment délimité entre deux membranes anioniques, et
- un troisième compartiment délimité entre une membrane anionique et une membrane cationique.

L'étape (iii) de substitution anionique peut ainsi être effectuée à l'aide de membrane(s) permsélective(s) ou non.

Dans une sous-variante (des variantes de l'étape iii) ci-avant), le premier compartiment est alimenté par au moins un sel basique, de préférence un sel d'hydroxyde de sodium, le second compartiment est alimenté par la composition protéique laitière partiellement déminéralisée et acidifiée obtenue à l'étape ii), et le troisième compartiment est alimenté par au moins un sel de chlorure d'un cation monovalent, de préférence de sodium.

Dans une variante, le procédé comprend une étape de traitement thermique (viii), effectuée après l'étape (ii) et avant l'étape iii).

De préférence, lors de cette étape (viii), la composition protéique laitière est à une température supérieure ou égale à 70°C et inférieure ou égale à 110°C, pendant un temps supérieur ou égal à 5 secondes et inférieur ou égal à 10 minutes.

Le milieu acide de la composition protéique laitière favorise l'élimination des germes, y compris ceux les plus difficiles à détruite, par exemple les germes sporulés.

Dans une variante, la composition protéique laitière à l'étape i) est du lactosérum, en particulier issu de l'agriculture biologique.

Dans une variante, la composition protéique laitière à l'étape i) est du lactosérum partiellement déminéralisé, notamment ayant subi au moins une étape choisie parmi : une étape d'électrodialyse, une étape de nanofiltration, une étape d'osmose inverse, une étape d'évaporation, et une combinaison de ces dernières.

Ces étapes permettent également de concentrer la CPL, ie d'augmenter son extrait sec en masse.

### Brève description des dessins

[Fig. 1]La figure 1 représente schématiquement les différentes étapes d'un premier exemple de procédé de fabrication d'une composition protéique laitière déminéralisée ;
[Fig. 2]La figure 2 représente schématiquement un exemple de l'étape de traitement v) selon l'invention, en particulier une unité cellulaire de l'électrodialyseur à membranes bipolaires mise en oeuvre dans les premier et second exemples de procédés représentés aux figures 1 et 3 ; et
[Fig. 3]La figure 3 représente schématiquement les différentes étapes d'un second exemple de procédé de fabrication d'une composition protéique laitière déminéralisée.

### Description des modes de réalisation

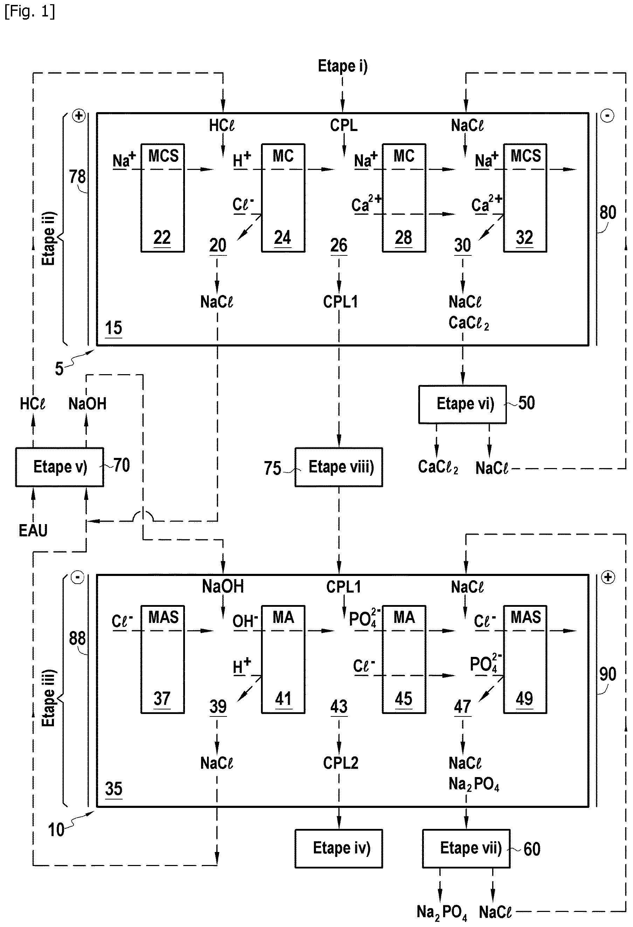

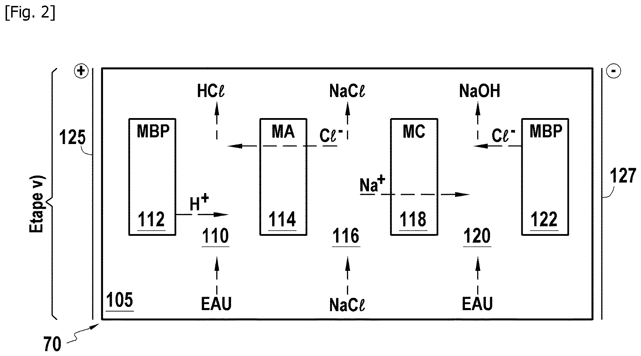

Le premier exemple de procédé de fabrication d'une composition protéique laitière déminéralisée représenté à la figure 1 comprend deux électrodialyseurs 5 et 10 dont les unités cellulaires 15 et 35 sont à trois compartiments. Une seule unité cellulaire 15 de l'électrodialyseur 5 est représentée à la figure 1. Cette unité cellulaire 15 comprend un premier compartiment 20 délimité entre une membrane permsélective cationique 22 et une membrane cationique 24, un second compartiment 26 délimité entre la membrane cationique 24 et la membrane cationique 28, et un troisième compartiment 30 délimité entre la membrane cationique 28 et la membrane permsélective cationique 32. Une seule unité cellulaire 35 de l'électrodialyseur 10 est représentée à la figure 1. Cette unité cellulaire 35 comprend un premier compartiment 39 délimité entre une membrane permsélective anionique 37 et une membrane anionique 41, un second compartiment 43 délimité entre la membrane anionique 41 et une membrane anionique 45, et enfin un troisième compartiment 47 délimité entre la membrane anionique 45 et la membrane permsélective anionique 49. Les membranes permsélectives cationiques 22 et 32 ne peuvent être traversées que par des cations monovalents, et les membranes permsélectives 37 et 49 ne peuvent être traversées que par les anions monovalents. Les électrodialyseurs 5 et 10 comprennent chacun une cathode (80,88) et une anode (78,90) générant un courant traversant les solutions conductrices passant dans les compartiments des unités cellulaires 15 et 35. Le procédé comprend également un premier dispositif de nanofiltration 50 pour la réalisation de l'étape vi), un second dispositif de nanofiltration 60 pour la réalisation de l'étape vii), et un électrodialyseur à membranes bipolaires à trois compartiments 70, détaillé à la figure 2, pour la réalisation de l'étape v). Ce premier exemple de procédé comprend également une unité de traitement thermique 75 pour effectuer l'étape de traitement de thermique viii).

En fonctionnement, une composition protéique laitière CPL, notamment du lactosérum déminéralisée à au moins 50%, est fournie dans une étape i) puis alimentée au second compartiment 26 de l'électrodialyseur 5. En même temps, du sel acidifié, notamment une solution d'acide chlorhydrique, est alimenté au premier compartiment 20, et une saumure, notamment un sel de chlorure de sodium, est alimenté au troisième compartiment 30. Les ions H⁺ traversent la membrane cationique 24 et sont remplacés par les ions Na⁺ venant du troisième compartiment 30 et donc traversant la membrane permsélective 32 ou 22 sous l'effet du champ électrique. Les cations, mono et/ou divalents, en particulier les ions Na⁺ et les ions Ca²⁺ traversent la membrane cationique 28, sous l'effet du champ électrique, en direction de la cathode 80, et sont substitués par des ions H⁺ venant du premier compartiment 20. La composition protéique laitière obtenue CPL1 à l'étape i) est ainsi partiellement déminéralisée, les cations ayant été substitués par des H⁺, et acidifiée. Le pH de CPL1 est inférieur ou égal à 4. Le troisième compartiment 30 comprend un mélange de sels de chlorure, notamment un sel de chlorure de calcium (CaCl₂) et un sel de chlorure de sodium (NaCl), issus de la composition protéique laitière CPL. Les ions monovalents (ex : Na⁺ ; K⁺) traversent ainsi la membrane permsélective cationique 22 ou 32 et alimentent le premier compartiment 20 tandis que les ions divalents (ex : Ca²⁺) restent dans le troisième compartiment 30.

La composition protéique laitière CPL1 acidifiée subit un traitement thermique à l'étape viii), (90°C, pendant quelques minutes) afin d'améliorer sa stabilité bactériologique. Avantageusement, la composition CPL1 étant acidifiée, les conditions du traitement thermique peuvent être plus poussées que habituellement et définies en sorte que les protéines ne soient pas altérées.

Le mélange de sels issus du troisième compartiment 30 peut subir une étape vi) de nanofiltration sur l'unité de nanofiltration 50 afin d'augmenter la pureté du sel de chlorure de sodium issu du troisième compartiment 30 par rétention des sels divalents, tel que le chlorure de calcium CaCl₂. Le sel de chlorure de sodium purifié est ainsi alimenté au troisième compartiment 30.

La composition CPL1, notamment pasteurisée, subit une seconde étape d'électrodialyse iii) sur l'électrodialyseur 10. Le premier compartiment 39 est alimenté par un sel basique, tel que de l'hydroxyde de sodium, issu de l'étape v). La mobilité des ions OH⁻ étant supérieure à la mobilité des ions Cl⁻, les ions OH⁻ traversent la membrane anionique 41, et sont remplacés par des ions Cl⁻ venant du premier compartiment 39 et ayant traversé une membrane permsélective anionique 49 ou 37 sous l'effet du champ électrique. Dans le second compartiment 43 alimenté par la composition CPL1 thermisée et acidifiée, les anions résiduels (chlorures, sulfates, phosphates) traversent la membrane anionique 45 sous l'effet du champ électrique en direction de l'anode 90, et sont substitués par des ions OH⁻ venant du premier compartiment 39. La composition CPL2 obtenue à l'étape iv) est ainsi déminéralisée et désacidifiée. Dans le troisième compartiment 47, le mélange des sels de chlorure de sodium et de chlorure de potassium (NaCl ,KCI) et des sels de phosphates sont issus de CPL1. Les ions chlorures traversent la membrane anionique sélective 49 et alimentent le premier compartiment 39 alors que les ions divalents, notamment les ions phosphates, sont bloqués dans le troisième compartiment 47 par la membrane permsélective anionique 49.

Les sels issus du troisième compartiment 47 peuvent subir une étape vii) de nanofiltration permettant d'augmenter la pureté du sel de chlorure de sodium issu du troisième compartiment 47 par rétention des ions phosphates.

Ce premier exemple de procédé comprend également une étape v) de traitement du sel de chlorure de sodium sur une unité d'électrodialyse à membranes bipolaires à trois compartiments 70 permettant de régénérer l'acide, principalement HCl, et la base, principalement de l'hydroxyde de sodium, à partir des flux de NaCl issus des premiers compartiments 20 et 39 des étapes ii) et iii) d'électrodialyse cationique et anionique, et éventuellement du NaCl issu des étapes de pré-déminéralisation effectuées en amont sur la composition CPL de l'étape i), et/ou du NaCl de grade alimentaire. Les dites étapes de pré-déminéralisation consistent de préférence en une étape de nanofiltration suivie d'une étape d'électrodialyse à deux compartiments appliqué au rétentat de nanofiltration. A l'exception du sel utilisé lors du démarrage de l'étape v), les sels acides et basiques utilisés pour la mise en oeuvre des étapes d'électrodialyse ii) et iii) sont issus de la composition protéique laitière CPL1, ce qui évite l'introduction de composés minéraux exogènes.

La figure 2 représente l'électrodialyseur 70 et une unité cellulaire 105 de ce dernier comprenant un premier compartiment 110 délimité entre une membrane bipolaire 112 et une membrane anionique 114, un second compartiment 116 délimité entre la membrane anionique 114 et une membrane cationique 118, et un troisième compartiment 120 délimité entre la membrane cationique 118 et une membrane bipolaire 122. Le sel, notamment le chlorure de sodium ou de potassium est alimenté au deuxième compartiment 116. Les ions chlorures traversent la membrane anionique 114 sous l'effet du champ électrique vers l'anode 125 tandis que les ions Na⁺, K⁺ traversent la membrane cationique sous l'effet du champ électrique vers la cathode 127. Cette étape v) permet de régénérer les sels acides et basiques, en particulier l'acide chlorhydrique et l'hydroxyde de sodium, lesquels sont ensuite alimentés pour le sel acide au premier compartiment de l'unité cellulaire 15 de l'étape ii), et pour le sel basique au premier compartiment de l'unité cellulaire 35 de l'étape iii).

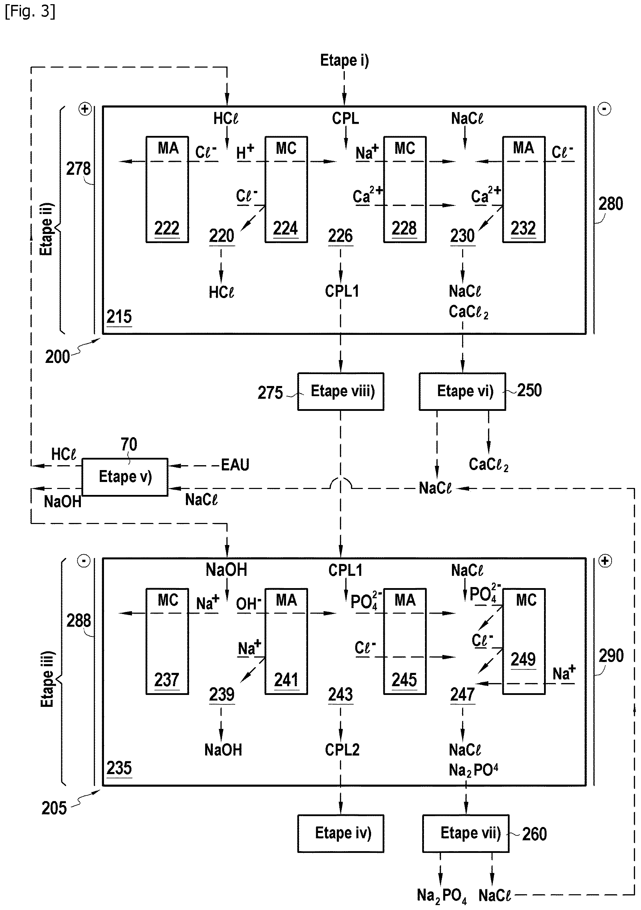

Le second exemple de procédé de fabrication d'une composition protéique laitière déminéralisée représenté à la figure 3 comprend deux électrodialyseurs 200 et 205 dont les unités cellulaires (215,235) sont à trois compartiments. Une seule unité cellulaire 215 de l'électrodialyseur 200 est représentée à la figure 3. Cette unité cellulaire 215 comprend un premier compartiment 220 délimité entre une membrane anionique 222 et une membrane cationique 224, un second compartiment 226 délimité entre la membrane cationique 224 et la membrane cationique 228, et un troisième compartiment 230 délimité entre la membrane cationique 228 et la membrane anionique 232. Une seule unité cellulaire 235 de l'électrodialyseur 205 est également représentée à la figure 3. Cette unité cellulaire 235 comprend un premier compartiment 239 délimité entre une membrane cationique 237 et une membrane anionique 241, un second compartiment 243 délimité entre la membrane anionique 241 et une membrane anionique 245, et enfin un troisième compartiment 247 délimité entre la membrane anionique 245 et la membrane cationique 249. Les électrodialyseurs 200 et 205 comprennent chacun une anode (278, 290) et une cathode (280, 288) générant un courant traversant les solutions conductrices passant dans les compartiments des unités cellulaires 215 et 235. Le procédé comprend également un premier dispositif de nanofiltration 250 pour la réalisation de l'étape vi), un second dispositif de nanofiltration 260 pour la réalisation de l'étape vii), et un électrodialyseur à membranes bipolaires à trois compartiments 70, détaillé à la figure 2, pour la réalisation de l'étape v). De plus, le procédé comprend une unité de traitement thermique 275 pour effectuer l'étape de traitement de thermique viii).

En fonctionnement, une composition protéique laitière CPL, notamment du lactosérum déminéralisée à au moins 50%, est alimentée au second compartiment 226 de l'électrodialyseur 200. En même temps, du sel acidifié, notamment une solution d'acide chlorhydrique, est alimenté au premier compartiment 220, et une saumure, notamment un sel de chlorure de sodium et un sel de chlorure de potassium, est alimentée au troisième compartiment 230. Seuls les ions H⁺ traversent la membrane cationique 224 vers le second compartiment 226 en direction de la cathode 280, et les ions chlorures traversent la membrane anionique 232 vers le troisième compartiment 230 en direction de l'anode 278. Dans le second compartiment 226, les cations mono ou divalents, tels que Na+ et Ca²⁺, traversent la membrane cationique 228 sous l'effet du champ électrique en direction de la cathode 280, et sont substitués par des ions H⁺ venant du premier compartiment 220. La composition protéique laitière obtenue CPL1 à l'étape ii) est ainsi partiellement déminéralisée, les cations ayant été substitués par des ions H⁺, et acidifiée. Le pH de CPL1 est inférieur ou égal à 4. Le troisième compartiment 230 comprend un mélange de CaCl₂ et de NaCl issus de la composition protéique laitière CPL. Les ions chlorures du premier compartiment 220 traversent la membrane anionique 222 ou 232 et alimentent le troisième compartiment 230.

La composition protéique laitière CPL1 acidifiée subit un traitement thermique à l'étape viii), en particulier une étape de thermisation (90°C, pendant quelques minutes) afin d'améliorer sa stabilité bactériologique. Avantageusement, la composition CPL1 étant acidifiée, les conditions du traitement thermique peuvent être définies en sorte que les protéines ne soient pas altérées.

Le mélange de sels issus du troisième compartiment 230 peut subir une étape vi) de nanofiltration sur l'unité de nanofiltration 250 afin d'augmenter la pureté du sel de chlorure de sodium issu du troisième compartiment 230 par extraction des sels divalents, tel que le chlorure de calcium CaCl₂. Cette étape peut être suivie de manière optionnelle d'un passage sur une résine chélatante pour atteindre les spécifications de 3-5 ppm en entrée de l'étape v).

La composition CPL1, notamment thermisée, subit une seconde étape d'électrodialyse iii) sur l'électrodialyseur 205. Le premier compartiment 239 est alimenté par un sel basique, tel que de l'hydroxyde de sodium, issu de l'étape v). Les ions OH⁻ traversent la membrane anionique 241 vers le second compartiment 243, et les ions Na⁺ traversent la membrane cationique 249 vers le troisième compartiment 247. Dans le second compartiment 243, les anions résiduels de CPL1 thermisée et acidifiée, tels que les chlorures et les phosphates, traversent la membrane anionique 245 sous l'effet du champ électrique vers l'anode 290, et sont substitués par des ions hydroxyles OH⁻, provenant du premier compartiment 239. La composition obtenue CPL2 est déminéralisée et désacidifiée à l'étape iv). Dans le troisième compartiment 247, le mélange des sels de chlorures de cations monovalents, notamment les sels de chlorures de potassium et de sodium, des sels de phosphates, et des sels de sulfates, sont issus de CPL1. Les anions, mono ou divalents, tels que chlorures, phosphates, sulfates, traversent la membrane anionique 245 et alimentent le troisième compartiment 247.

Les sels issus du troisième compartiment 247 peuvent subir une étape vii) de nanofiltration permettant d'augmenter la pureté du sel de chlorure de sodium issu du troisième compartiment 247 par extraction des ions phosphates.

Ce second exemple de procédé comprend également une étape v) de traitement du sel de chlorure de sodium sur une unité d'électrodialyse à membranes bipolaires à trois compartiments 70 permettant de régénérer l'acide, principalement HCl, et la base, principalement de l'hydroxyde de sodium, à partir des flux de NaCl issus indirectement des troisièmes compartiments 230 et 247 des étapes ii) et iii) d'électrodialyse cationique et anionique puisqu'ils ont subi au préalable les étapes de nanofiltration des étapes vi) et vii). Les flux de NaCl peuvent provenir éventuellement, en mélange ou non avec ceux issus des étapes ii) et iii), du NaCl issu des étapes de pré-déminéralisation effectuées en amont sur la composition CPL de l'étape i), et/ou d'un NaCl de grade alimentaire. Les dites étapes de pré-déminéralisation consistent de préférence en une étape de nanofiltration suivie d'une étape d'électrodialyse à deux compartiments appliquée au rétentat de nanofiltration. A l'exception des sels utilisés lors du démarrage des étapes ii) et iii), grâce à l'étape v), les sels acides et basiques utilisés pour la mise en oeuvre des étapes d'électrodialyse ii) et iii) sont issus de la composition protéique laitière CPL1, ce qui évite l'introduction de composés minéraux exogènes.

Le second exemple de procédé diffère du premier exemple en ce que les étapes ii) et iii) ne comprennent pas de membranes permsélectives, et que les flux de NaCl traités par électrodialyse à membranes bipolaires ne sont pas issus directement des électrodialyseurs 200 et 205, mais subissent une étape intermédiaire de nanofiltration correspondant à l'étape vi) ou vii).

L'étape ii) de substitution cationique peut être effectuée indifféremment sur l'électrodialyseur 5 (fig.1) ou 200 (fig.3).

L'étape iii) de substitution anionique peut être effectuée indifféremment sur l'électrodialyseur 10 (fig.1) ou 205 (fig.3).

Pour la réalisation des essais décrits ci-après, une composition protéique laitière, CPL, a été réalisée en préparant une dispersion d'une poudre de lactosérum doux (brut), à 16% de masse sèche dans de l'eau déminéralisée. La dispersion est agitée mécaniquement jusqu'à l'obtention d'un mélange homogène. CPL présente ainsi les paramètres suivants : taux massique en matière sèche : 15,9% (masse poudre/masse totale); pH= 5.95; conductivité initiale : 10,95 mS/cm; taux massique en cendres : 8,1%; taux massique en lactose : 73,5%; taux massique en cations (notamment Na, NH₄, K, Ca, Mg) : 3,79% ; taux massique en anions (notamment Cl , NO₃, PO₄, SO₄) : 3,64% ; les différents taux massiques (à l'exception de celui en matière sèche) sont calculés en rapportant la masse totale d'un ou plusieurs composé(s) sur la masse totale de la matière sèche.

1- Substitution cationique sur l'électrodialyseur 200 (fig.3) L'électrodialyseur 200 comprend par exemple de 5 à 15 cellules 215. Le premier compartiment 220 est alimenté par une solution de HCl ayant une conductivité supérieure ou égale à 100 mS/cm, en particulier supérieur ou égal à 150 mS/cm. Le deuxième compartiment 226 est alimenté par CPL exemplifié ci-dessus. Le troisième compartiment est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 1 ampère, notamment inférieur ou égal à 2 ampères est appliqué à l'électrodialyseur 200, et la tension est de préférence laissée libre. Au cours de l'électrodialyse ii), la conductivité de CPL diminue témoignant de sa déminéralisation, puis elle augmente car les cations qu'elle comprend sont substitués par des ions H+. Le pH de CPL1 obtenu est de l'ordre de 1, et la conductivité de CPL1 est d'environ 12 mS/cm. La conductivité de la solution acide, ie HCl, en sortie du premier compartiment 220 est abaissée d'environ 74%, et la conductivité de la saumure, ie NaCl, obtenue en sortie du troisième compartiment 230, est augmentée d'environ 234%. L'abattement en cations est environ de 84%.

### 2- Substitution cationique sur l'électrodialvseur 5 (fig.1)

L'électrodialyseur 5 comprend par exemple de 5 à 15 cellules 15. Le premier compartiment 20 est alimenté par une solution de HCl ayant une conductivité supérieure ou égale à 100 mS/cm, en particulier supérieur ou égal à 150 mS/cm. Le deuxième compartiment 26 est alimenté par CPL exemplifié ci-dessus. Le troisième compartiment est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 1 ampère, notamment inférieur ou égal à 2 ampères est appliqué à l'électrodialyseur 5, et la tension est de préférence laissée libre. Au début de l'électrodialyse ii), la conductivité de CPL diminue témoignant de sa déminéralisation, puis elle augmente car les cations qu'elle comprend sont substitués par des ions H⁺. Dans le compartiment acide 20, la conductivité baisse du fait de l'épuisement des ions H⁺ et de la production de NaCl, moins conducteur. Les cations extraits de CPL migrent dans le compartiment saumure 30, qui s'enrichit en cations multivalents plus conducteurs que le NaCl. Le pH de CPL1 obtenu est de l'ordre de 1, et la conductivité de CPL1 est d'environ 12 mS/cm. La conductivité de la solution acide en sortie du premier compartiment 220 est abaissée d'environ 35%, et la conductivité de la saumure obtenue en sortie du troisième compartiment 30, est augmentée d'environ 25%. L'abattement en cations est environ de 82%.

Pour la mise en oeuvre de l'étape iii), CPL1 utilisé peut être indifféremment celui issu de l'électrodialyseur 5 ou 200 puisque ces derniers ont des performances identiques en terme de taux d'abattement en cations.

### 3- Substitution anionique sur l'électrodialvseur 205 (fig.3)

L'électrodialyseur 205 comprend par exemple de 5 à 15 cellules 235. Le premier compartiment 239 est alimenté par une solution de NaOH ayant une conductivité supérieure ou égale à 30 mS/cm, en particulier supérieur ou égal à 50 mS/cm. Le deuxième compartiment 243 est alimenté par CPL1 obtenu ci-dessus. Le troisième compartiment 247 est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 1 ampère, notamment inférieur ou égal à 2 ampères, est appliqué à l'électrodialyseur 205, et la tension est de préférence laissée libre. Au cours de l'électrodialyse iii), la conductivité de CPL1 diminue témoignant de sa déminéralisation. Le pH de CPL2 obtenu est supérieur à 6, , dans cet exemple précis de l'ordre de 7.7, et la conductivité de CPL2 est d'environ 1 mS/cm. La conductivité de la solution basique, ie NaOH, en sortie du premier compartiment 239 est abaissée d'environ 120%, et la conductivité de la saumure obtenue en sortie du troisième compartiment 247, est augmentée d'environ 126%. L'abattement en anions est environ de 98%. L'abattement de la conductivité de CPL pour arriver à CPL2 est de 85%.

### 4- Substitution anionique sur l'électrodialyseur 10 (fig.1)

L'électrodialyseur 10 comprend par exemple de 5 à 15 cellules 35. Le premier compartiment 39 est alimenté par une solution de NaOH ayant une conductivité supérieure ou égale à 30 mS/cm, en particulier supérieur ou égal à 50 mS/cm, dans cet exemple précis supérieur ou égal à 80 mS/cm. Le deuxième compartiment 43 est alimenté par CPL1 obtenu ci-dessus. Le troisième compartiment 47 est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 1 ampère, notamment inférieur ou égal à 2 ampères est appliqué à l'électrodialyseur 10, et la tension est de préférence laissée libre. Au cours de l'électrodialyse iii), la conductivité de CPL1 diminue témoignant de sa déminéralisation. Le pH de CPL2 obtenu est supérieur ou égal à 6, de l'ordre de 7 et la conductivité de CPL2 est d'environ 2 mS/cm. La conductivité de la solution basique en sortie du premier compartiment 39 est abaissée d'environ 21%, et la conductivité de la saumure obtenue en sortie du troisième compartiment 47, est abaissée de 25%. L'abattement en anions est environ de 84%. L'abattement de la conductivité de CPL pour arriver à CPL2 est de 77%.

Selon le taux de déminéralisation souhaité, il est possible en partant du CPL exemplifié ci-dessus, d'atteindre un taux de déminéralisation de 90%, avec un taux de cendres inférieur à 1,5% sur matière sèche (MS), par exemple en combinant la substitution cationique selon le point 1 ou 2 exemplifié ci-dessus avec la substitution anionique selon le point 3 exemplifié ci-dessus.

Il est possible également que le CPL de départ soit déjà partiellement déminéralisée, ce qui permet de combiner la substitution anionique exemplifiée selon le point 4 ci-dessus avec une substitution cationique selon l'invention.

Pour la réalisation des essais décrits ci-après, une composition protéique laitière, CPL", a été réalisée en préparant une dispersion d'une poudre de lactosérum doux (brut), à 17% de masse sèche dans de l'eau déminéralisée. La dispersion est agitée mécaniquement jusqu'à l'obtention d'un mélange homogène. CPL" présente ainsi les paramètres suivants : taux massique en matière sèche : 17% (masse poudre/masse totale); pH= 5 ; conductivité initiale : 12 mS/cm; taux massique en cendres : 8 % ; taux massique en lactose : 74 % ; taux massique en cations (notamment Na, NH₄, K, Ca, Mg) : 5 %; taux massique en anions (notamment CI , NO₃, PO₄, SO₄) : 3 % ; les différents taux massiques (à l'exception de celui en matière sèche) sont calculés en rapportant la masse totale d'un ou plusieurs composé(s) sur la masse totale de la matière sèche.

### 5. Substitution cationique sur l'électrodialyseur 200 (ESC)_ (fig.3)

L'électrodialyseur 200 comprend par exemple de 5 à 15 cellules 215. Le premier compartiment 220 est alimenté par une solution de HCl ayant une conductivité supérieure ou égale à 100 mS/cm, en particulier supérieur ou égal à 150 mS/cm. Le deuxième compartiment 226 est alimenté par CPL" exemplifiée ci-dessus. Le troisième compartiment est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 2 ampères, notamment inférieur ou égal à 3 ampères est appliqué à l'électrodialyseur 200, et la tension est de préférence laissée libre. Au cours de l'électrodialyse ii), la conductivité de CPL" diminue témoignant de sa déminéralisation, puis elle augmente car les cations qu'elle comprend sont substitués par des ions H⁺. Le pH de CPL1" obtenu est de l'ordre de 2, et la conductivité de CPL1" est d'environ 12 mS/cm. La conductivité de la solution acide, ie HCl, en sortie du premier compartiment 220 est abaissée d'environ 53%, et la conductivité de la saumure, ie NaCl, obtenue en sortie du troisième compartiment 230, est augmentée d'environ 292%. L'abattement en cations (ou taux de substitution) est environ de 77%. Le taux en anions est quant à lui sensiblement similaire entre CPL" et CPL1".

### 6. Electrodialvse conventionnelle à deux compartiment (ED) (Membrane Anionique / Membrane Cationique)

Cet électrodialyseur (non représenté sur les dessins) comprend par exemple de 5 à 15 cellules. Le premier compartiment est délimité entre une membrane cationique et une membrane anionique, et le deuxième compartiment est délimité entre une membrane anionique et une membrane cationique. Le premier compartiment est alimenté par CPL1" décrit ci-dessus et le deuxième compartiment est alimenté par un sel, notamment du chlorure de sodium, ayant une conductivité supérieure ou égale à 5 ms/cm et inférieure ou égale à 15 ms/cm. Lors de l'essai, une tension supérieure ou égale à 10V et inférieure ou égal à 20V, notamment inférieure ou égale à 15V, est appliquée à l'électrodialyseur à deux compartiments, et le courant (I) est laissé libre. Au-cours de l'essai, la conductivité de CPL1" diminue, témoignant de sa déminéralisation. Une partie des ions H⁺ sont extraits dans le compartiment saumure, d'où l'augmentation du pH de CPL1"(ESC + ED) en sortie, en particulier à un pH supérieur ou égal à 2.5, notamment supérieur ou égal à 3. La conductivité finale de CPL1"(ESC + ED) est abaissée , environ de 90% par rapport à CPL, grâce à cette électrodialyse conventionnelle. Le taux d'abattement en cations (Na, NH₄, K, Ca, Mg) dans CPL1" (ESC + ED) est supérieur ou égal à 90% (par rapport à CPL1" obtenue en sortie de l'ED de substitution cationique, fig.3). Le taux d'abattement en anions (CI, NO₃, PO₄, SO₄) dans CPL1" (ESC + ED) est supérieur ou égal à environ 80 % (par rapport à CPL1" obtenue en sortie de l'ED de substitution cationique, fig.3).

### 7. Substitution anionique sur l'électrodialyseur 205 (ESA) (fig.3)

L'électrodialyseur 205 comprend par exemple de 5 à 10 cellules 235. Le premier compartiment 239 est alimenté par une solution de NaOH ayant une conductivité comprise entre 20 et 35 mS/cm. Le deuxième compartiment 243 est alimenté par CPL1" (ESC+ED) obtenue ci-dessus. Le troisième compartiment 247 est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Une tension supérieure ou égale à 10V et inférieure ou égale à 15V est appliquée, et le courant (I) est de préférence laissé libre. Au cours de l'électrodialyse iii), la conductivité de CPL1" (ESC+ED) diminue témoignant de sa déminéralisation. Les anions extraits de CPL1" (ESC+ED) migrent vers le troisième compartiment comprenant la saumure. Le pH de CPL2" obtenu est supérieur à 4, dans cet exemple précis de l'ordre de 5, et la conductivité de CPL2" est inférieure à 1. La conductivité de la solution basique, ie NaOH, en sortie du premier compartiment 239 est abaissée de plus de 55%, , et la conductivité de la saumure en sortie du troisième compartiment 247, est augmentée de plus de 35%. L'abattement de la conductivité de CPL" pour arriver à CPL2" est supérieur ou égal à 95%. Le taux d'abattement final (entre CPL" et CPL2"), à la fois pour les anions et les cations, est supérieur ou égal à 95%.

## Revendications

1. Procédé de fabrication d'une composition protéique laitière
déminéralisée (CPL2), **caractérisé en ce qu'**il comprend les étapes suivantes:
(i)- fourniture d'une composition protéique laitière (CPL);
(ii)- électrodialyse de la composition protéique laitière (CPL) sur un électrodialyseur (5,200), dont les unités cellulaires (15, 215) sont à trois compartiments (20,26,30 ; 220,226,230), et configuré pour substituer au moins un cation par au moins un ion hydrogène H⁺ dans la composition protéique laitière (CPL) pour obtenir une composition protéique laitière au moins partiellement déminéralisée et acidifiée (CPL1);
(iii)- électrodialyse de la composition protéique laitière (CPL1) obtenue à l'étape (ii) sur un électrodialyseur (10,205), dont les unités cellulaires sont à trois compartiments (39,43,47 ; 239,243,247), et configuré pour substituer au moins un anion par au moins un ion hydroxyle OH⁻ dans la composition protéique laitière;
(iv) obtention de la composition protéique laitière déminéralisée (CPL2).

2. Procédé de fabrication selon la revendication 1, **caractérisé en ce qu'**il comprend une étape de traitement (v) d'au moins une partie du ou des sel(s) choisi(s) parmi les sels suivants :
- le ou les sel(s) issu(s) directement de l'étape d'électrodialyse ii),
- le ou les sel(s) issu(s) indirectement de l'étape d'électrodialyse ii),
- le ou les sel(s) issu(s) directement de l'étape d'électrodialyse iii),
- le ou les sel(s) issu(s) indirectement de l'étape d'électrodialyse iii),
- le ou les sel(s) issu(s) d'une étape de déminéralisation préliminaire effectuée sur la composition protéique laitière à l'étape i),
- un mélange de ces derniers,
Ladite étape de traitement (v) étant configurée pour produire un ou des acide(s) du ou des sel(s) d'une part, et une ou des base(s) du ou des sel(s) d'autre part.

3. Procédé de fabrication selon la revendication 2, **caractérisé en ce que** l'étape de traitement (v) consiste en une étape d'électrodialyse effectuée sur un électrodialyseur à membrane(s) bipolaire(s) (70).

4. Procédé de fabrication selon la revendication 3, **caractérisé en ce que** l'électrodialyseur à membrane(s) bipolaire(s) (70), à l'étape (v), comprend des unités cellulaires (105) à trois compartiments A, B et C (110,116,120), les compartiments A et B sont alimentés en eau et un compartiment C, disposé entre les compartiments A et B, est alimenté par un ou plusieurs sel(s).

5. Procédé de fabrication selon l'une quelconque des revendications 2 à 4, **caractérisé en ce que** au moins une partie du ou des sel(s), notamment d'acide chlorhydrique et/ou d'acide sulfurique, obtenu(s) lors de l'étape de traitement (v), est/sont alimenté(s) à l'un des trois compartiments (20,26,30 ; 220,226,230) de l'électrodialyseur (5,200) à l'étape ii).

6. Procédé de fabrication selon l'une quelconque des revendications 2 à 5, **caractérisé en ce que** au moins une partie du ou des sel(s), notamment d'hydroxyde de sodium et/ou d'hydroxyde de potassium, obtenu(s) lors de l'étape de traitement (v), est/sont alimenté(s) à l'un des trois compartiments (39,43,47 ; 239,243,247) de l'électrodialyseur (10, 205) à l'étape iii).

7. Procédé de fabrication selon l'une quelconque des revendications 1 à 6, **caractérisé en ce qu'**il comprend une étape d'électrodialyse de la composition protéique laitière au moins partiellement déminéralisée et acidifiée (CPL1) obtenue à l'étape ii), et effectuée avant l'étape iii), sur un électrodialyseur comprenant des unitaires cellulaires à deux compartiments.

8. Procédé de fabrication selon l'une quelconque des revendications 1 à 7, **caractérisé en ce que** l'étape d'électrodialyse ii) produit un mélange comprenant au moins un sel de chlorure d'un cation monovalent, et au moins un sel de chlorure d'un cation divalent, et **en ce que** ce mélange subit une étape de séparation (vi), notamment de nanofiltration, du ou des sel(s) de chlorure d'un cation monovalent et du ou des sel(s) de chlorure d'un cation divalent.

9. Procédé de fabrication selon l'une quelconque des revendications 1 à 8, **caractérisé en ce que** l'étape d'électrodialyse iii) produit un mélange comprenant au moins un sel de sodium d'un anion monovalent, et au moins un sel de sodium d'un anion divalent, et **en ce que** ce mélange subit une étape de séparation (vii), notamment de nanofiltration, du ou des sel(s) de sodium d'un anion monovalent et du ou des sel(s) de sodium d'un anion divalent.

10. Procédé de fabrication selon l'une ou l'autre des revendications 8 et 9, **caractérisé en ce que** le sel d'un cation monovalent, en particulier le sel de chlorure d'un cation monovalent, collecté à l'issu de l'étape de séparation (vi) et/ou l'étape de séparation (vii) est alimenté à l'étape d'électrodialyse ii) et/ou à l'étape d'électrodialyse iii).

11. Procédé de fabrication selon l'une ou l'autre des revendications 8 et 9, **caractérisé en ce que** le sel d'un cation monovalent, en particulier le sel de chlorure d'un cation monovalent, collecté à l'issu de l'étape de séparation (vi) et/ou l'étape de séparation (vii) subit au moins en partie l'étape de traitement (v).

12. Procédé de fabrication selon l'une quelconque des revendications 1 à 11, **caractérisé en ce que** l'électrodialyseur (5) à l'étape ii) comprend au moins une membrane permsélective aux cations monovalents (22,32).

13. Procédé de fabrication selon l'une quelconque des revendications 1 à 12, **caractérisé en ce que** les unités cellulaires (15) à trois compartiments (20,26,30) de l'électrodialyseur (5) à l'étape ii) comprennent au moins une unité cellulaire (15) comprenant:
- un premier compartiment (20) délimité entre une membrane permsélective aux cations monovalents (22) et une membrane cationique (24) ;
- un second compartiment (26) délimité entre deux membranes cationiques (24,28) ;
- un troisième compartiment (30) délimité entre une membrane cationique (28) et une membrane permsélective aux cations monovalents (32).

14. Procédé de fabrication selon l'une quelconque des revendications 1 à 13, **caractérisé en ce que** les unités cellulaires (215) à trois compartiments (220,226,230) de l'électrodialyseur (200) à l'étape ii) comprennent au moins une unité cellulaire (215) comprenant :
- un premier compartiment (220) délimité entre une membrane anionique (222) et une membrane cationique (224) ;
- un second compartiment (226) délimité entre deux membranes cationiques (224,228) ; et
- un troisième compartiment (230) délimité entre une membrane cationique (228) et une membrane anionique (232).

15. Procédé de fabrication selon l'une ou l'autre des revendications 13 et 14, **caractérisé en ce que** le premier compartiment (20,220) est alimenté par au moins un sel acide, en particulier d'acide chlorhydrique, le second compartiment (26,226) est alimenté par la composition protéique laitière de l'étape i) (CPL), et le troisième compartiment (30,230) est alimenté au moins par un sel de chlorure d'un cation monovalent.

16. Procédé de fabrication selon l'une quelconque des revendications 1 à 15, **caractérisé en ce que** l'électrodialyseur à l'étape iii) comprend au moins une membrane permsélective aux anions monovalents (37,49).

17. Procédé de fabrication selon l'une quelconque des revendications 1 à 16, **caractérisé en ce que** les unités cellulaires (35) à trois compartiments (39,43,47) de l'électrodialyseur à l'étape iii) comprennent au moins une unité cellulaire (35) comprenant :
- un premier compartiment (39) délimité entre une membrane permsélective aux anions monovalents (37) et une membrane anionique (41) ;
- un second compartiment (43) délimité entre deux membranes anioniques (41,45) ;
- un troisième compartiment (47) délimité entre une membrane anionique (45) et une membrane permsélective aux anions monovalents (49).

18. Procédé de fabrication selon l'une quelconque des revendications 1 à 15, **caractérisé en ce que** les unités cellulaires (235) à trois compartiments (239,243,247) de l'électrodialyseur (205) à l'étape iii) comprennent au moins une unité cellulaire (235) comprenant :
- un premier compartiment (239) délimité entre une membrane cationique (237) et une membrane anionique (241) ;
- un second compartiment (243) délimité entre deux membranes anioniques (241,245), et un troisième compartiment (247) délimité entre une membrane anionique (245) et une membrane cationique (249).

19. Procédé de fabrication selon l'une ou l'autre des revendications 17 et 18, **caractérisé en ce que** le premier compartiment (39,239) est alimenté par au moins un sel basique, de préférence d'hydroxyde de sodium, le second compartiment (43,243) est alimenté par la composition protéique laitière partiellement déminéralisée et acidifiée obtenue à l'étape ii) (CPL1), et le troisième compartiment (47,247) est alimenté au moins par un sel de chlorure d'un cation monovalent.

20. Procédé de fabrication selon l'une quelconque des revendications 1 à 19, **caractérisé en ce qu'**il comprend une étape de traitement thermique viii) (75, 275), effectuée après l'étape (ii), et avant l'étape iii).

21. Procédé de fabrication selon l'une quelconque des revendications 1 à 20, **caractérisé en ce que** la composition protéique laitière à l'étape i) (CPL) est du lactosérum, en particulier issu de l'agriculture biologique.

22. Procédé de fabrication selon l'une quelconque des revendications 1 à 21, **caractérisé en ce que** la composition protéique laitière à l'étape i) (CPL) est du lactosérum partiellement déminéralisé, notamment ayant subi au moins une étape choisie parmi : une étape d'électrodialyse, une étape de nanofiltration, une étape d'osmose inverse, une étape d'évaporation, et une combinaison de ces dernières.

## Patentansprüche

1. Verfahren zur Herstellung einer demineralisierten Milchproteinzusammensetzung (CPL2), **dadurch gekennzeichnet, dass** es die folgenden Schritte umfasst:
(i) Bereitstellung einer Milchproteinzusammensetzung (CPL),
(ii) Elektrodialyse der Milchproteinzusammensetzung (CPL) auf einem Elektrodialysator (5, 200), dessen Zelleinheiten (15, 215) mit drei Kompartimenten (20, 26, 30; 220, 226, 230) sind und der dazu ausgestaltet ist, mindestens ein Kation durch mindestens ein H⁺ -Wasserstoffion in der Milchproteinzusammensetzung (CPL) zu ersetzen, um eine zumindest teilweise demineralisierte und angesäuerte Milchproteinzusammensetzung (CPL1) zu erhalten,
(iii) Elektrodialyse der Milchproteinzusammensetzung (CPL1), die in Schritt (ii) erhalten wird, auf einem Elektrodialysator (10, 205), dessen Zelleinheiten mit drei Kompartimenten (39, 43, 47; 239, 243, 247) sind und der dazu ausgestaltet ist, mindestens ein Anion durch mindestens ein OH⁻-Hydroxylion in der Milchproteinzusammensetzung zu ersetzen,
(iv) Erhalt der demineralisierten Milchproteinzusammensetzung (CPL2).

2. Verfahren zur Herstellung nach Anspruch 1, **dadurch gekennzeichnet, dass** es einen Behandlungsschritt (v) von mindestens einem Teil des Salzes oder der Salze ausgewählt aus den folgenden Salzen umfasst:
- dem oder den direkt aus dem Elektrodialyseschritt ii) resultierende(n) Salz(en),
- dem oder den indirekt aus dem Elektrodialyseschritt ii) resultierende(n) Salz(en),
- dem oder den direkt aus dem Elektrodialyseschritt iii) resultierende(n) Salz(en),
- dem oder den indirekt aus dem Elektrodialyseschritt iii) resultierende(n) Salz(en),
- dem oder den aus einem vorläufigen Demineralisierungsschritt, der an der Milchproteinzusammensetzung in Schritt i) durchgeführt wird, resultiere(n) Salz(en),
- einer Mischung davon,
wobei der Behandlungsschritt (v) dazu ausgestaltet ist, einerseits eine oder mehrere Säure(n) des Salzes oder der Salze und andererseits eine oder mehrere Base(n) des Salzes oder der Salze zu produzieren.

3. Verfahren zur Herstellung nach Anspruch 2, **dadurch gekennzeichnet, dass** der Behandlungsschritt (v) aus einem Elektrodialyseschritt besteht, der auf einem Elektrodialysator mit bipolarer/bipolaren Membran(en) (70) durchgeführt wird.

4. Verfahren zur Herstellung nach Anspruch 3, **dadurch gekennzeichnet, dass** der Elektrodialysator mit bipolarer/bipolaren Membran(en) (70) in Schritt (v) Zelleinheiten (105) mit drei Kompartimenten A, B und C (110, 116, 120) umfasst, wobei die Kompartimente A und B mit Wasser gespeist werden und ein Kompartiment C, das zwischen den Kompartimenten A und B angeordnet ist, mit einem oder mehreren Salz(en) gespeist wird.

5. Verfahren zur Herstellung nach einem der Ansprüche 2 bis 4, **dadurch gekennzeichnet, dass** zumindest ein Teil des Salzes oder der Salze, das/die in dem Behandlungsschritt (v) erhalten wird/werden, insbesondere von Salzsäure und/oder Schwefelsäure, in Schritt ii) in eines der drei Kompartimente (20, 26, 30; 220, 226, 230) des Elektrodialysators (5, 200) eingespeist wird.

6. Verfahren zur Herstellung nach einem der Ansprüche 2 bis 5, **dadurch gekennzeichnet, dass** zumindest ein Teil des Salzes oder der Salze, das/die in dem Behandlungsschritt (v) erhalten wird/werden, insbesondere von Natriumhydroxid und/oder Kaliumhydroxid, in Schritt iii) in eines der drei Kompartimente (39, 43, 47; 239, 243, 247) des Elektrodialysators (10, 205) eingespeist wird.

7. Verfahren zur Herstellung nach einem der Ansprüche 1 bis 6, **dadurch gekennzeichnet, dass** es einen Elektrodialyseschritt der in Schritt ii) erhaltenen, zumindest teilweise demineralisierten und angesäuerten Milchproteinzusammensetzung (CPL1), und vor Schritt iii) durchgeführt, auf einem Elektrodialysator umfasst, der Zelleinheiten mit zwei Kompartimenten umfasst.

8. Verfahren zur Herstellung nach einem der Ansprüche 1 bis 7, **dadurch gekennzeichnet, dass** der Elektrodialyseschritt ii) eine Mischung produziert, die mindestens ein Chloridsalz eines einwertigen Kations und mindestens ein Chloridsalz eines zweiwertigen Kations umfasst, und dass diese Mischung einem Trennungsschritt (vi), insbesondere Nanofiltration, des Chloridsalzes oder der Chloridsalze eines einwertigen Kations und des Chloridsalzes oder der Chloridsalze eines zweiwertigen Kations unterzogen wird.

9. Verfahren zur Herstellung nach einem der Ansprüche 1 bis 8, **dadurch gekennzeichnet, dass** der Elektrodialyseschritt iii) eine Mischung produziert, die mindestens ein Natriumsalz eines einwertigen Anions und mindestens ein Natriumsalz eines zweiwertigen Anions umfasst, und dass diese Mischung einem Trennungsschritt (vii), insbesondere Nanofiltration, des Natriumsalzes oder der Natriumsalze eines einwertigen Anions und des Natriumsalzes oder der Natriumsalze eines zweiwertigen Anions unterzogen wird.

10. Verfahren zur Herstellung nach einem der Ansprüche 8 und 9, **dadurch gekennzeichnet, dass** das Salz eines einwertigen Kations, insbesondere das Chloridsalz eines einwertigen Kations, das an dem Ende des Trennungsschrittes (vi) und/oder des Trennungsschrittes (vii) gesammelt wird, in den Elektrodialyseschritt ii) und/oder den Elektrodialyseschritt iii) eingespeist wird.

11. Verfahren zur Herstellung nach einem der Ansprüche 8 und 9, **dadurch gekennzeichnet, dass** das Salz eines einwertigen Kations, insbesondere das Chloridsalz eines einwertigen Kations, das an dem Ende des Trennungsschrittes (vi) und/oder des Trennungsschrittes (vii) gesammelt wird, zumindest teilweise dem Behandlungsschritt (v) unterzogen wird.

12. Verfahren zur Herstellung nach einem der Ansprüche 1 bis 11, **dadurch gekennzeichnet, dass** der Elektrodialysator (5) in Schritt ii) mindestens eine Membran umfasst, die permselektiv für die einwertigen Kationen (22, 32) ist.

13. Verfahren zur Herstellung nach einem der Ansprüche 1 bis 12, **dadurch gekennzeichnet, dass** die Zelleinheiten (15) mit drei Kompartimenten (20, 26, 30) des Elektrodialysators (5) in Schritt ii) mindestens eine Zelleinheit (15) umfassen, umfassend:
- ein erstes Kompartiment (20), das zwischen einer Membran, die permselektiv für die einwertigen Kationen (22) ist, und einer kationischen Membran (24) begrenzt ist,
- ein zweites Kompartiment (26), das zwischen zwei kationischen Membranen (24,28) begrenzt ist,
- ein drittes Kompartiment (30), das zwischen einer kationischen Membran (28) und einer Membran, die permselektiv für die einwertigen Kationen (32) ist, begrenzt ist.

14. Verfahren zur Herstellung nach einem der Ansprüche 1 bis 13, **dadurch gekennzeichnet, dass** die Zelleinheiten (215) mit drei Kompartimenten (220, 226, 230) des Elektrodialysators (200) in Schritt ii) mindestens eine Zelleinheit (215) umfassen, umfassend:
- ein erstes Kompartiment (220), das zwischen einer anionischen Membran (222) und einer kationischen Membran (224) begrenzt ist,
- ein zweites Kompartiment (226), das zwischen zwei kationischen Membranen (224, 228) begrenzt ist, und
- ein drittes Kompartiment (230), das zwischen einer kationischen Membran (228) und einer anionischen Membran (232) begrenzt ist.

15. Verfahren zur Herstellung nach einem der Ansprüche 13 und 14, **dadurch gekennzeichnet, dass** das erste Kompartiment (20, 220) mit mindestens einem sauren Salz, insbesondere von Salzsäure, gespeist wird, das zweite Kompartiment (26, 226) mit der Milchproteinzusammensetzung von Schritt i) (CPL) gespeist wird und das dritte Kompartiment (30, 230) mit mindestens einem Chloridsalz eines einwertigen Kations gespeist wird.

16. Verfahren zur Herstellung nach einem der Ansprüche 1 bis 15, **dadurch gekennzeichnet, dass** der Elektrodialysator in Schritt iii) mindestens eine Membran umfasst, die permselektiv für die einwertigen Anionen (37, 49) ist.

17. Verfahren zur Herstellung nach einem der Ansprüche 1 bis 16, **dadurch gekennzeichnet, dass** die Zelleinheiten (35) mit drei Kompartimenten (39, 43, 47) des Elektrodialysators in Schritt iii) mindestens eine Zelleinheit (35) umfassen, umfassend:
- ein erstes Kompartiment (39), das zwischen einer Membran, die permselektiv für die einwertigen Anionen (37) ist, und einer anionischen Membran (41) begrenzt ist,
- ein zweites Kompartiment (43), das zwischen zwei anionischen Membranen (41, 45) begrenzt ist,
- ein drittes Kompartiment (47), das zwischen einer anionischen Membran (45) und einer Membran, die permselektiv für die einwertigen Anionen (49) ist, begrenzt ist.

18. Verfahren zur Herstellung nach einem der Ansprüche 1 bis 15, **dadurch gekennzeichnet, dass** die Zelleinheiten (235) mit drei Kompartimenten (239, 243, 247) des Elektrodialysators (205) in Schritt iii) mindestens eine Zelleinheit (235) umfassen, umfassend:
- ein erstes Kompartiment (239), das zwischen einer kationischen Membran (237) und einer anionischen Membran (241) begrenzt ist,
- ein zweites Kompartiment (243), das zwischen zwei anionischen Membranen (241, 245) begrenzt ist, und ein drittes Kompartiment (247), das zwischen einer anionischen Membran (245) und einer kationischen Membran (249) begrenzt ist.

19. Verfahren zur Herstellung nach einem der Ansprüche 17 und 18, **dadurch gekennzeichnet, dass** das erste Kompartiment (39, 239) mit mindestens einem basischen Salz, vorzugsweise Natriumhydroxid, gespeist wird, das zweite Kompartiment (43, 243) mit der teilweise demineralisierten und angesäuerten Milchproteinzusammensetzung, die in Schritt ii) erhalten wird, (CPL1), gespeist wird, und das dritte Kompartiment (47, 247) mit mindestens einem Chloridsalz eines einwertigen Kations gespeist wird.

20. Verfahren zur Herstellung nach einem der Ansprüche 1 bis 19, **dadurch gekennzeichnet, dass** es einen Wärmebehandlungsschritt viii) (75, 275) umfasst, der nach Schritt (ii) und vor Schritt iii) durchgeführt wird.

21. Verfahren zur Herstellung nach einem der Ansprüche 1 bis 20, **dadurch gekennzeichnet, dass** die Milchproteinzusammensetzung in Schritt i) (CPL) Molke ist, insbesondere aus biologischem Anbau resultierend.

22. Verfahren zur Herstellung nach einem der Ansprüche 1 bis 21, **dadurch gekennzeichnet, dass** die Milchproteinzusammensetzung in Schritt i) (CPL) teilweise demineralisierte Molke ist, die insbesondere mindestens einem Schritt unterzogen wurde, ausgewählt aus: einem Elektrodialyseschritt, einem Nanofiltrationsschritt, einem Umkehrosmoseschritt, einem Verdampfungsschritt und einer Kombination davon.

## Claims

1. A process for manufacturing a demineralized milk protein composition (MPC2), **characterized in that** it comprises the following steps:
(i)- providing a milk protein composition (MPC);
(ii)- electrodialysis of the milk protein composition (MPC) on an electrodialyzer (5, 200), the unit cells (15, 215) of which have three compartments (20, 26, 30; 220, 226, 230), and configured to substitute at least one cation by at least one hydrogen ion H⁺ in the milk protein composition (MPC) to obtain an at least partially demineralized and acidified milk protein composition (MPC1);
(iii)- electrodialysis of the milk protein composition (MPC1) obtained in step (ii) on an electrodialyzer (10, 205), the unit cells of which have three compartments (39, 43, 47; 239, 243, 247), and configured to substitute at least one anion by at least one hydroxyl ion OH⁻ in the milk protein composition;
(iv) obtaining the demineralized milk protein composition (MPC2).

2. The manufacturing process as claimed in claim 1, **characterized in that** it comprises a step of treating (v) at least part of the salt(s) selected from the following salts:
- the salt(s) derived directly from the electrodialysis step ii),
- the salt(s) derived indirectly from the electrodialysis step ii),
- the salt(s) derived directly from the electrodialysis step iii),
- the salt(s) derived indirectly from the electrodialysis step iii),
- the salt(s) from a preliminary demineralization step carried out on the milk protein composition in step i),
- a mixture of the latter,
said treatment step (v) being configured to produce one or more acid(s) from the salt(s) on the one hand, and a base(s) from the salt(s) on the other hand.

3. The manufacturing process as claimed in claim 2, **characterized in that** the treatment step (v) consists of an electrodialysis step carried out on a bipolar membrane electrodialyzer (70).

4. The manufacturing process as claimed in claim 3, **characterized in that** the bipolar membrane electrodialyzer (70), in step (v), comprises unit cells (105) with three compartments A, B and C (110, 116, 120), the compartments A and B are supplied with water and a compartment C, arranged between the compartments A and B, is supplied with one or more salt(s).

5. The manufacturing process as claimed in any one of claims 2 to 4, **characterized in that** at least part of the salt(s), in particular of hydrochloric acid and/or of sulfuric acid, obtained during the treatment step (v), is/are supplied to one of the three compartments (20, 26, 30; 220, 226, 230) of the electrodialyzer (5, 200) in step ii).

6. The manufacturing process as claimed in any one of claims 2 to 5, **characterized in that** at least part of the salt(s), in particular of sodium hydroxide and/or potassium hydroxide, obtained during the treatment step (v), is/are supplied to one of the three compartments (39, 43, 47; 239, 243, 247) of the electrodialyzer (10, 205) in step iii).

7. The manufacturing process as claimed in any one of claims 1 to 6, **characterized in that** it comprises a step of electrodialysis of the at least partially demineralized and acidified milk protein composition (MPC1) obtained in step ii), and carried out before step iii), on an electrodialyzer comprising two-compartment unit cells.

8. The manufacturing process as claimed in any one of claims 1 to 7, **characterized in that** the electrodialysis step ii) produces a mixture comprising at least one chloride salt of a monovalent cation and at least one chloride salt of a divalent cation, and **in that** this mixture undergoes a separation step (vi), in particular nanofiltration, of the chloride salt(s) of a monovalent cation and the chloride salt(s) of a divalent cation.

9. The manufacturing process as claimed in any one of claims 1 to 8, **characterized in that** the electrodialysis step iii) produces a mixture comprising at least one sodium salt of a monovalent anion and at least one sodium salt of a divalent anion, and **in that** this mixture undergoes a separation step (vii), in particular nanofiltration, of the sodium salt(s) of a monovalent anion and of the sodium salt(s) of a divalent anion.

10. The manufacturing process as claimed in either of claims 8 and 9, **characterized in that** the salt of a monovalent cation, in particular the chloride salt of a monovalent cation, collected at the conclusion of the separation step (vi) and/or the separation step (vii) is supplied to the electrodialysis step ii) and/or to the electrodialysis step iii).

11. The manufacturing process as claimed in either of claims 8 and 9, **characterized in that** the salt of a monovalent cation, in particular the chloride salt of a monovalent cation, collected at the conclusion of the separation step (vi) and/or the separation step (vii) undergoes, at least in part, the treatment step (v).

12. The manufacturing process as claimed in any one of claims 1 to 11, **characterized in that** the electrodialyzer (5) in step ii) comprises at least one membrane permselective to monovalent cations (22, 32).

13. The manufacturing process as claimed in any one of claims 1 to 12, **characterized in that** the three-compartment (20, 26, 30) unit cells (15) of the electrodialyzer (5) in step ii) comprise at least one unit cell (15) comprising:
- a first compartment (20) delimited between a membrane permselective to monovalent cations (22) and a cationic membrane (24);
- a second compartment (26) delimited between two cationic membranes (24, 28);
- a third compartment (30) delimited between a cationic membrane (28) and a membrane permselective to monovalent cations (32).

14. The manufacturing process as claimed in any one of claims 1 to 13, **characterized in that** the three-compartment (220, 226, 230) unit cells (215) of the electrodialyzer (200) in step ii) comprise at least one unit cell (215) comprising:
- a first compartment (220) delimited between an anionic membrane (222) and a cationic membrane (224);
- a second compartment (226) delimited between two cationic membranes (224, 228); and
- a third compartment (230) delimited between a cationic membrane (228) and an anionic membrane (232).

15. The manufacturing process as claimed in either of claims 13 and 14, **characterized in that** the first compartment (20, 220) is supplied with at least one acid salt, in particular hydrochloric acid, the second compartment (26, 226) is supplied with the milk protein composition of step i) (MPC), and the third compartment (30, 230) is supplied with at least one chloride salt of a monovalent cation.

16. The manufacturing process as claimed in any one of claims 1 to 15, **characterized in that** the electrodialyzer in step iii) comprises at least one membrane permselective to monovalent anions (37, 49).

17. The manufacturing process as claimed in any one of claims 1 to 16, **characterized in that** the three-compartment (39, 43, 47) unit cells (35) of the electrodialyzer in step iii) comprise at least one unit cell (35) comprising:
- a first compartment (39) delimited between a membrane permselective to monovalent anions (37) and an anionic membrane (41);
- a second compartment (43) delimited between two anionic membranes (41, 45);
- a third compartment (47) delimited between an anionic membrane (45) and a membrane permselective to monovalent anions (49).

18. The manufacturing process as claimed in any one of claims 1 to 15, **characterized in that** the three-compartment (239, 243, 247) unit cells (235) of the electrodialyzer (205) in step iii) comprise at least one unit cell (235) comprising:
- a first compartment (239) delimited between a cationic membrane (237) and an anionic membrane (241);
- a second compartment (243) delimited between two anionic membranes (241, 245), and a third compartment (247) delimited between an anionic membrane (245) and a cationic membrane (249).

19. The manufacturing process as claimed in either of claims 17 and 18, **characterized in that** the first compartment (39, 239) is supplied with at least one basic salt, preferably of sodium hydroxide, the second compartment (43, 243) is supplied with the partially demineralized and acidified milk protein composition obtained in step ii) (MPC1), and the third compartment (47, 247) is supplied with at least one chloride salt of a monovalent cation.

20. The manufacturing process as claimed in any one of claims 1 to 19, **characterized in that** it comprises a heat treatment step viii) (75, 275), performed after step (ii), and before step iii).

21. The manufacturing process as claimed in any one of claims 1 to 20, **characterized in that** the milk protein composition in step i) (MPC) is whey, in particular derived from organic farming.

22. The manufacturing process as claimed in any one of claims 1 to 21, **characterized in that** the milk protein composition in step i) (MPC) is partially demineralized whey, in particular having undergone at least one step selected from: an electrodialysis step, a nanofiltration step, a reverse osmosis step, an evaporation step, and a combination thereof.
